# EUROPEAN PATENT APPLICATION

(11) **EP 4 553 981 A1**
(43) Date of publication of application: **14.05.2025**
(21) Application number: 22954324.4
(22) Date of filing: 09.08.2022
(51) Int. Cl.: H01M 50/298, H01M 50/271

(54) **END COVER ASSEMBLY, BATTERY ASSEMBLY, BATTERY, AND ELECTRICAL DEVICE**

(71) Applicant: Contemporary Amperex Technology Co., Limited, Ningde, Fujian 352100 (CN)
(72) Inventor: CHEN, Xinxiang, Ningde, Fujian 352100 (CN); HUANG, Shoujun, Ningde, Fujian 352100 (CN); ZHENG, Yulian, Ningde, Fujian 352100 (CN); CHEN, Long, Ningde, Fujian 352100 (CN); LIN, Denghua, Ningde, Fujian 352100 (CN); WANG, Peng, Ningde, Fujian 352100 (CN)
(74) Representative: Ran, Handong
(86) International application number: PCT/CN2022/111205
(87) International publication number: WO 2024/031347

(57) **Abstract**

The present application relates to the technical field of batteries, and provides an end cover assembly, a battery assembly, a battery, and an electrical device. The end cover assembly comprises a first end cover, a second end cover, a first insulation piece, an electrode terminal and a collection piece; the first end cover is used for sealing the opening of a first housing; the second end cover is used for sealing the opening of a second housing; the first insulation piece is disposed between the first end cover and the second end cover; the electrode terminal is mounted on the first end cover, the first insulation piece and the second end cover; the collection piece is embedded in the first insulation piece and is connected to the electrode terminal, and may collect relevant information at a collector terminal. Thus, information collection is more convenient, and information related to a battery provided with the end cover assembly may be collected without the need for external wiring, thereby simplifying the structure of the battery. The collection piece is embedded in the first insulation piece, which makes the structure of the end cover assembly more compact, and results in the end cover assembly having a smaller size. The collection piece is embedded in the first insulation piece, which can also enhance the insulation strength of the first insulation piece.

## Description

### TECHNICAL FIELD

The present application relates to the technical field of batteries, and in particular to an end cover assembly, a battery pack, a battery, and an electrical device.

### BACKGROUND

Secondary batteries, e.g. lithium-ion batteries, sodium-ion batteries, solid-state batteries, etc., have outstanding advantages such as high energy density and good cycling performance, and are widely applied in portable electronic devices, electric transportation, electric tools, unmanned aerial vehicles, energy storage devices, and other fields. During the use of a battery, if relevant information for the battery, such as voltage information, can be learned, it is of great significance for judging the status of the battery. Therefore, how to acquire the relevant information for the battery has become an urgent problem in the battery field.

### SUMMARY OF THE INVENTION

Embodiments of the present application provide an end cover assembly, a battery pack, a battery, and an electrical device in order to acquire relevant information for a battery.

In a first aspect, an embodiment of the present application provides an end cover assembly, including a first end cover, a second end cover, a first insulating member, an electrode terminal, and a collecting member; the first end cover is used to close an opening of a first case; the second end cover is used to close an opening of a second case; the first insulating member is disposed in stacked manner between the first end cover and the second end cover along a first direction; the electrode terminal is mounted to the first end cover, the first insulating member, and the second end cover; the collecting member is embedded within the first insulating member and connected to the electrode terminal.

In the above technical solution, if a first electrode assembly accommodated within the first case and a second electrode assembly accommodated within the second case are electrically connected through the electrode terminal, the collecting member is embedded within the first insulating member and connected to the electrode terminal, so as to be able to collect relevant information at the electrode terminal, so that information collection is more convenient. Moreover, related information for a battery with this end cover assembly can be collected without external wires, such that the structure of the battery is simpler. The collecting member is embedded within the first insulating member, which enables the structure of the end cover assembly to be more compact and the volume of the end cover assembly to be smaller, and helps increase the energy density of the battery with this end cover assembly. The collecting member is embedded within the first insulating member, which can also enhance insulation strength of the first insulating member, enabling the first insulating member to stably insulate and isolate the first end cover and the second end cover, thereby reducing the risk of short circuit of the battery having this end cover assembly.

In some embodiments of the first aspect of the present application, the collecting member is provided with a through hole for the electrode terminal to penetrate.

In the above technical solution, the electrode terminal penetrates the through hole of the collecting member, and the through hole and the electrode terminal form a positioning fit, enabling a stable relative position relationship to be formed between the electrode terminal and the collecting member, and the risk of the collecting member being disengaged from the electrode terminal to be reduced, which helps the collecting member stably collect information for the electrode terminal.

In some embodiments of the first aspect of the present application, the electrode terminal includes a main body portion penetrating the through hole, and a hole wall surface of the through hole is in contact with an outer peripheral surface of the main body portion.

In the above technical solution, the hole wall surface of the through hole contacts the outer peripheral surface of the main body portion so as to achieve a connection between the electrode terminal and the collecting member, and the connection is convenient. The through hole and the electrode terminal form a positioning fit, enabling a stable relative position relationship be formed between the electrode terminal and the collecting member, and the risk of the collecting member being disengaged from the electrode terminal to be reduced, which helps the collecting member stably collect information for the electrode terminal.

In some embodiments of the first aspect of the present application, an outer peripheral surface of the first insulating member is provided with a slot extending to the interior of the first insulating member along a second direction, with the collecting member at least partially inserted into the slot, and the first direction perpendicular to the second direction.

In the above technical solution, the collecting member is inserted into the slot of the first insulating member, which not only does not require additional space, but also enables the first insulating member to insulate and isolate the collecting member from the first end cover and the collecting member from the second end cover, thereby reducing the risk of short circuit of the battery with this end cover assembly.

In some embodiments of the first aspect of the present application, the collecting member is entirely located within the slot.

In the above technical solution, the collecting member is entirely located within the slot, and then the collecting member will not extend out of the slot to interfere with other structures.

In some embodiments of the first aspect of the present application, the slot forms a slot opening at the outer peripheral surface of the first insulating member, and along the second direction, a spacing between the collecting member and the slot opening is H, and H≤3 mm.

In the above technical solution, the collecting member is entirely located within the slot and the distance between the collecting member and the slot opening of the slot is less than or equal to 3 mm, which not only allows the collecting member not to extend out of the slot to interfere with other structures, but also allows the collecting member to be not too far from the slot opening, making it convenient to mount the collecting member.

In some embodiments of the first aspect of the present application, along the first direction, the thickness of the collecting member is T₁, and the thickness of the first insulating member is T₂, where T₁/T₂≥0.1.

In the above technical solution, the strength and fracture toughness of the collecting member are better than those of the first insulating member, and the thickness T₁ of the collecting member and the thickness T₂ of the first insulating member satisfy T₁/T₂≥0.1, such that the overall structural formed by the first insulating member and the collecting member is better in strength.

In some embodiments of the first aspect of the present application, T₁/T₂≤0.7.

In the above technical solution, the thickness T₁ of the collecting member and the thickness T₂ of the first insulating member satisfy T₁/T₂≤0.7, such that the first insulating member has good insulation performance on both sides of the collecting member along the first direction.

In some embodiments of the first aspect of the present application, along the second direction, the length of the collecting member is L₁, and the length of the first insulating member is L₂, where L₁/L₂≥0.5.

In the above technical solution, the length L₁ of the collecting member and the length L₂ of the first insulating member satisfy: L₁/L₂≥0.5, such that the overall structure formed by the first insulating member and the collecting member has good structural strength.

In some embodiments of the first aspect of the present application, L₁/L₂≤1.

In the above technical solution, the length L₁ of the collecting member and the length L₂ of the first insulating member satisfy: L₁/L₂≤1, such that the collecting member does not extend beyond the first insulating member along the second direction to interfere with other structures.

In some embodiments of the first aspect of the present application, along a third direction, the width of the collecting member is W₁, the width of the first insulating member is W₂, where W₁/W₂≥ 0.4, and the first direction, the second direction, and the third direction are mutually perpendicular to each other.

In the above technical solution, the width W₁ of the collecting member and the width W₂ of the first insulating member satisfy: W₁/W₂≥0.4, such that the overall structure formed by the first insulating member and the collecting member has good structural strength.

In some embodiments of the first aspect of the present application, W₁/W₂≤0.8.

In the above technical solution, the width W₁ of the collecting member and the width W₂ of the first insulating member satisfy: W₁/W₂≤0.8, such that the collecting member does not extend beyond the first insulating member along the third direction to interfere with other structures.

In some embodiments of the first aspect of the present application, the first end cover is provided with a first mounting hole, the second end cover is provided with a second mounting hole, the first insulating member is provided with a third mounting hole, the electrode terminal includes a main body portion, and the main body portion penetrates the first mounting hole, the third mounting hole, and the second mounting hole.

In the above technical solution, the main body portion penetrates the first mounting hole, the third mounting hole, and the second mounting hole, then the first mounting hole, the second mounting hole, and the third mounting hole are all in positioning fit with the electrode terminal, such that the first end cover, the second end cover and the first insulating member can be in a stable relative position relationship with the electrode terminal, improving structural stability of the end cover assembly.

In some embodiments of the first aspect of the present application, the diameter of the first mounting hole is greater than that of the main body portion, the diameter of the second mounting hole is greater than that of the main body portion, and the diameter of the third mounting hole is greater than that of the main body portion.

In the above technical solution, the diameters of the first mounting hole, the second mounting hole, and the third mounting hole are all greater than the diameter of the main body portion, reducing the risk of assembly failure caused by interference of the main body portion of the electrode terminal with the first end cover, the second end cover, and the first insulating member during assembly.

In some embodiments of the first aspect of the present application, the electrode terminal further includes a first connecting portion and a second connecting portion, the first connecting portion and the second connecting portion are both connected to the main body portion, the first connecting portion is located on a side of the first end cover facing away from the second end cover, and the second connecting portion is located on a side of the second end cover facing away from the first end cover.

In the above technical solution, the first connecting portion and the second connecting portion are both connected to the main body portion, and are located on the side of the first end cover facing away from the second end cover and the side of the second end cover facing away from the first end cover, respectively, which can provide a limiting action to enable the structure of the end cover assembly to be more compact and the structural stability of the end cover assembly to be improved.

In some embodiments of the first aspect of the present application, the end cover assembly further includes a second insulating member and a third insulating member, at least part of the second insulating member is located between the first end cover and the first connecting portion to insulate and separate the first end cover and the first connecting portion, and at least part of the third insulating member is located between the second end cover and the second connecting portion to insulate and separate the second end cover and the second connecting portion.

In the above technical solution, the provision of the second insulating member and the third insulating member can reduce the risk of short circuit of a battery pack and a battery having this end cover assembly.

In some embodiments of the first aspect of the present application, the end cover assembly further includes a first sealing member and a second sealing member, at least part of the first sealing member provides sealing between the first connecting portion and the first end cover, and at least part of the second sealing member provides sealing between the second connecting portion and the second end cover.

In the above technical solution, the first sealing member and the second sealing member can improve sealing performance for the end cover assembly, and can reduce the risk of liquid leakage of the battery pack and the battery with this end cover assembly from the end cover assembly.

In a second aspect, an embodiment of the present application provides a battery pack, including a first case, a second case, and an end cover assembly according to any of the embodiments of the first aspect; the first case is used to accommodate a first electrode assembly; the second case is used to accommodate a second electrode assembly; the first end cover covers an opening of the first case, the second end cover covers an opening of the second case, and the electrode terminal is used to achieve an electrical connection between the first electrode assembly and the second electrode assembly.

In the above technical solution, with the battery pack including the end cover assembly of any of the embodiments of the first aspect, information collection is more convenient, and related information for the battery pack with this end cover assembly can be collected without external wires, such that the structure of the battery pack is simpler.

In a third aspect, an embodiment of the present application provides a battery, including a battery pack according to the embodiments of the second aspect.

In a fourth aspect, an embodiment of the present application provides an electrical device, including a battery according to the embodiments of the third aspect.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
FIG. 2 is an exploded view of a battery according to some embodiments of the present application;
FIG. 3 is a structural schematic diagram of a battery pack according to some embodiments of the present application;
FIG. 4 is an exploded view of a battery pack according to some embodiments of the present application;
FIG. 5 is an exploded view of an end cover assembly according to some embodiments of the present application;
FIG. 6 is a post-assembly schematic diagram of an end cover assembly according to some embodiments of the present application;
FIG. 7 is a sectional view of an end cover assembly according to some embodiments of the present application;
FIG. 8 is an enlarged view at A in FIG. 7;
FIG. 9 is a schematic diagram of fitting of a collecting member, a first insulating member, and an electrode terminal according to some other embodiments of the present application;
FIG. 10 is a schematic diagram of fitting of a collecting member, a first insulating member, and an electrode terminal according to some embodiments of the present application;
FIG. 11 is a structural schematic diagram of a first insulating member according to some embodiments of the present application;
FIG. 12 is a post-fitting sectional view of a first insulating member and a collecting member according to some embodiments of the present application;
FIG. 13 is a post-fitting sectional view of a first insulating member and a collecting member according to some other embodiments of the present application;
FIG. 14 is a post-fitting sectional view of a first insulating member and a collecting member according to yet some other embodiments of the present application;
FIG. 15 is a post-fitting sectional view of a first insulating member and a collecting member according to yet some further embodiments of the present application;
FIG. 16 is a post-fitting schematic diagram of a first insulating member and a collecting member according to some embodiments of the present application;
FIG. 17 is a structural schematic diagram of an electrode terminal according to some embodiments of the present application;
FIG. 18 is a structural schematic diagram of a second insulating member according to some embodiments of the present application;
FIG. 19 is a structural schematic diagram of a third insulating member according to some embodiments of the present application;
FIG. 20 is a structural schematic diagram of a first sealing member according to some embodiments of the present application;
and FIG. 21 is a structural schematic diagram of a second sealing member according to some embodiments of the present application.

Numerals: 1000, vehicle; 100, battery; 10, box; 11, first box; 12, second box; 20, battery pack; 21, first case; 211, first opening; 22, second case; 221, second opening; 23, first electrode assembly; 231, positive tab; 24, second electrode assembly; 241, negative tab; 25, end cover assembly; 251, first end cover; 2511, first mounting hole; 252, second end cover; 2521, second mounting hole; 253, first insulating member; 2531, slot; 2532, slot opening; 2533, first portion; 2534, second portion; 2535, third mounting hole; 254, electrode terminal; 2541, main body portion; 25411, first section; 25412, second section; 2542, first connecting portion; 2543, second connecting portion; 255, collecting member; 2551, through hole; 2552, first surface; 2553, second surface; 256, second insulating member; 2561, first insulating portion; 2562, second insulating portion; 2563, first receiving hole; 257, third insulating member; 2571, third insulating portion; 2572, fourth insulating portion; 2573, second receiving hole; 258, first sealing member; 2581, first sealing portion; 2582, second sealing portion; 259, second sealing member; 2591, third sealing portion; 2592, fourth sealing portion; 200, controller; 300, motor; X, first direction; Y, second direction; Z, third direction.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the examples of the present application rather than all the embodiments. The assembly of the examples of the present application generally described and illustrated in the drawings herein can be arranged and designed in a variety of different configurations.

Accordingly, the following detailed description of the embodiments of the present application provided in the accompanying drawings is not intended to limit the scope of the present application for which protection is claimed, but merely to indicate selected embodiments of the present application. All the other embodiments obtained by a person of ordinary skill in the art based on the embodiments of the present application without any creative effort shall fall within the scope of protection of the present application.

It should be noted that, without conflict, embodiments in the present application and features in the embodiments may be combined together.

It should be noted that similar reference numerals and letters denote similar items in the following drawings, and therefore, once an item is defined in one drawing, further definition and explanation thereof is not required in subsequent drawings.

In the description of the embodiments of the present application, it should be noted that the orientation or positional relationship is indicated as being based on the orientation or positional relationship shown in the accompanying drawings, or the orientation or positional relationship in which the product of the present application is customarily placed in use, or as customarily understood by those skilled in the art, solely for the purpose of facilitating the description of the present application and simplifying the description, but do not indicate or imply that the apparatuses or elements referred to must have a particular orientation, be constructed and operate in a particular orientation, and therefore cannot be construed as a limitation of the present application. In addition, the terms "first", "second" and "third" are only used to distinguish the description, and cannot be construed as indicating or implying relative importance.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. As the application fields of the power batteries constantly expand, their market demand is also constantly augmenting.

During the use of a battery, if relevant information about the battery, such as voltage information, can be learned, it is of great significance for judging the status and capacity of the battery.

The inventors have noticed that in order to increase the voltage of a battery, multiple battery cells may be connected in series through a busbar component. In this case, two wires may be led out of the exterior of the battery to connect, respectively, to a positive transfer electrode (a positive electrode terminal of one of the multiple battery cells) and a negative transfer electrode (a negative electrode terminal of one of the multiple battery cells) of the battery to collect, in conjunction with a collecting circuit board, the relevant information (such as voltage information) for the battery. The busbar component in this series connection manner takes up a large space, resulting in a lower energy density of the battery.

In order to alleviate the problem of low battery energy density, the applicant has studied and discovered that the series connection manner of multiple battery cells of the battery may be improved with no need to provide a busbar component. Two battery cells share an electrode terminal, thereby achieving an electrical connection of electrode assemblies of the two battery cells, and achieving series connection of the two battery cells. For this series connection manner, a distance between the two battery cells is very small, and it is impossible to connect the electrode terminals with external wires, so it is impossible to collect information for the electrode terminals (for example, it is impossible to collect voltage for the electrode terminals).

Based on the above considerations, in order to facilitate the collection of information for electrode terminals for a battery with two battery cells sharing an electrode terminal, the inventors have designed an end cover assembly via in-depth research. The end cover assembly includes a first end cover, a second end cover, a first insulating member, an electrode terminal, and a collecting member; the first end cover is used to close an opening of a first case; the second end cover is used to close an opening of a second case; the first insulating member is disposed in stacked manner between the first end cover and the second end cover along a first direction; the electrode terminal is mounted to the first end cover, the first insulating member, and the second end cover; the collecting member is embedded within the first insulating member and connected to the electrode terminal.

If a first electrode assembly accommodated within the first case and a second electrode assembly accommodated within the second case are electrically connected through the electrode terminal, the collecting member is embedded within the first insulating member and connected to the electrode terminal, so as to be able to collect relevant information at the electrode terminal, so that information collection is more convenient. Moreover, related information for a battery with this end cover assembly can be collected without external wires, such that the structure of the battery is simpler.

The collecting member is embedded within the first insulating member, which enables the structure of the end cover assembly to be more compact and the volume of the end cover assembly to be smaller, and helps increase the energy density of the battery with this end cover assembly.

The collecting member is embedded within the first insulating member, which can also enhance insulation strength of the first insulating member, enabling the first insulating member to stably insulate and isolate the first end cover and the second end cover, thereby reducing the risk of short circuit of the battery having this end cover assembly.

The end cover assembly disclosed in the embodiments of the present application may be used in a battery pack or battery having this end cover assembly, and may also be used in an electrical device of a power supply system consisting of a battery pack or battery having this end cover assembly. This makes it convenient to acquire relevant information for the battery, thereby facilitating monitoring of power usage of the electrical device.

An embodiment of the present application provides an electrical apparatus using a battery as a power source. The electrical apparatus may be, but is not limited to, a mobile phone, a tablet, a laptop, an electric toy, an electric tool, a battery vehicle, an electric vehicle, a ship, a spacecraft, etc. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

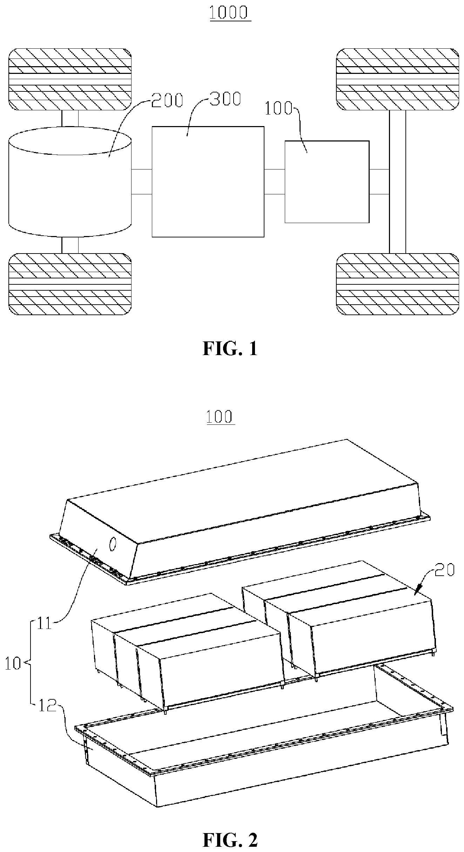

Referring to FIG. 1, FIG. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to FIG. 2, FIG. 2 is an exploded view of a battery 100 according to some embodiments of the present application. The battery 100 includes a box 10 and at least one battery pack 20. The battery pack 20 is accommodated within the box 10. Here, the box 10 is used to provide an accommodating space for the battery pack 20, and the box 10 may be of various structures. In some embodiments, the box 10 may include a first box 11 and a second box 12. The first box 11 and the second box 12 are covered by each other, and the first box 11 and the second box 12 together define an accommodating space for accommodating the battery pack 20. The second box 12 may have one end open to form a hollow structure for accommodating the battery pack 20, the first box 11 may be of a plate-like structure, and the first box 11 covers an opening side of the second box 12, so that the first box 11 and the second box 12 together define the accommodating space. Both of the first box 11 and the second box 12 may also be of a hollow structure with one side open to form an accommodating cavity for accommodating the battery pack 20, and an opening side of the first box 11 covers the opening side of the second box 12. Of course, the box 10 formed by the first box 11 and the second box 12 may be of a variety of shapes, such as a cylinder, a rectangular solid, etc.

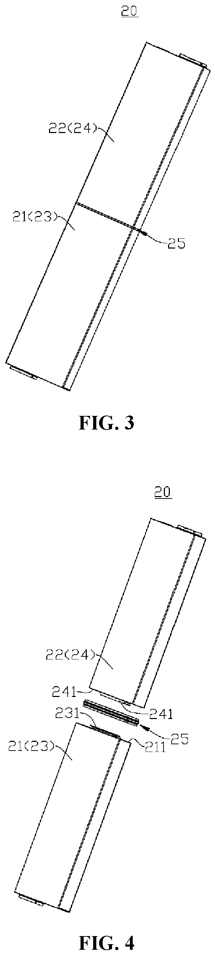

As shown in FIGS. 3 and 4, the battery pack 20 includes a first case 21, a second case 22, a first electrode assembly 23, a second electrode assembly 24, and an end cover assembly 25.

The first case 21 has a first opening 211, the second case 22 has a second opening 221, the end cover assembly 25 covers the first opening 211 and the second opening 221, the end cover assembly 25 and the first case 21 define a space for accommodating the first electrode assembly 23, and the end cover assembly 25 and the second case 22 define a space for accommodating the second electrode assembly 24.

The first case 21 and the second case 22 may be of various shapes and sizes, e.g. a rectangular solid, a cylinder, a hexagonal prism etc. Specifically, the shape of the first case 21 and the second case 22 may be determined based on the specific shape and size of the electrode assemblies. The shapes of the first case 21 and the second case 22 may be the same or different. The first case 21 and the second case 22 may be made of various materials, e.g. copper, iron, aluminum, stainless steel, an aluminum alloy, plastic etc., which is not particularly limited in this embodiment of the present application.

The first electrode assembly 23 and the second electrode assembly 24 both consist of a positive electrode plate (not shown), a negative electrode plate (not shown), and a separator (not shown). Working of the battery pack 20 mainly relies on a movement of metal ions between the positive electrode plate and the negative electrode plate. The positive electrode plate includes a positive electrode current collector and a positive electrode active material layer. A surface of the positive electrode current collector is coated with the positive electrode active material layer. A part, not coated with the positive electrode active material layer, of the positive electrode current collector is raised over a part, coated with the positive electrode active material layer, of the positive electrode current collector, and a part, not coated with the positive electrode active material layer, of the positive electrode current collector serve as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer. The parts, not coated with the negative electrode active material layer, of the negative electrode current collector protrude from the part, coated with the negative electrode active material layer, of the negative electrode current collector, and the parts, not coated with the negative electrode active material layer, of the negative electrode current collector serve as negative tabs. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The separator may be of a material, e.g. polypropylene (PP) or polyethylene (PE) etc. In addition, the first electrode assembly 23 and the second electrode assembly 24 may be a wound structure or a laminated structure; one of the first electrode assemblies 23 may be of a wound structure, and the other may be of a laminated structure. However, the embodiments of the present application are not limited thereto.

The end cover assembly 25 is used to electrically connect the first electrode assembly 23 and the second electrode assembly 24. Here, it may be the case that a positive tab 231 of the first electrode assembly 23 and a negative tab 241 of the second electrode assembly 24 are electrically connected through the end cover assembly 25 to achieve an electrical connection between the first electrode assembly 23 and the second electrode assembly 24; or that a negative tab of the first electrode assembly 23 and a positive tab of the second electrode assembly 24 are electrically connected through the end cover assembly 25 to achieve the electrical connection between the first electrode assembly 23 and the second electrode assembly 24; or that the negative tab of the first electrode assembly 23 and the negative tab of the second electrode assembly 24 are electrically connected through the end cover assembly 25 to achieve the electrical connection between the first electrode assembly 23 and the second electrode assembly 24.

The battery pack 20 may be a secondary battery or a primary battery; or it may be a lithium-sulfur battery, a sodium-ion battery or a magnesium-ion battery, but is not limited thereto. The first electrode assembly 23 and the second electrode assembly 24 may be cylindrical, flat, rectangular, in other shapes or the like. The first case 21 and the second case 22 may be cylindrical, flat, rectangular, in other shapes or the like.

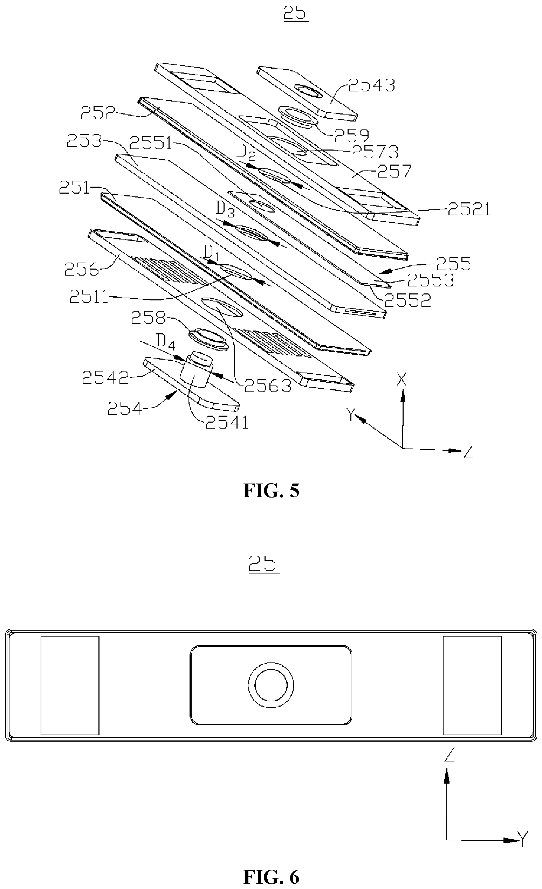

As shown in FIG. 5, in some embodiments, the end cover assembly 25 includes a first end cover 251, a second end cover 252, a first insulating member 253, an electrode terminal 254, and a collecting member 255; the first end cover 251 is used to close an opening of the first case 21; the second end cover 252 is used to close an opening of the second case 22; the first insulating member 253 is disposed in stacked manner between the first end cover 251 and the second end cover 252 along a first direction X; the electrode terminal 254 is mounted to the first end cover 251, the first insulating member 253, and the second end cover 252; the collecting member 255 is embedded within the first insulating member 253 and connected to the electrode terminal 254.

The opening of the first case 21 is a first opening 211, and the opening of the second case 22 is a second opening 221. The first end cover 251 covers the first opening 211, and the first end cover 251 and the first case 21 together define a first space for accommodating the first electrode assembly 23. The second end cover 252 covers the second opening 221, and the second end cover 252 and the second case 22 together define a second space for accommodating the second electrode assembly 24. The first space and the second space may also accommodate an electrolyte and other components.

Without limitation, the shape of the first end cover 251 may be adapted to that of the first case 21 or that of the first opening 211 of the first case 21 to fit the first case 21, and the shape of the second end cover 252 may be adapted to that of the second case 22 or that of the second opening 221 of the second case 22 to fit the second case 22. Optionally, the first end cover 251 and the second end cover 252 may be made of a material (such as an aluminum alloy) with a certain hardness and strength, so that the first end cover 251 and the second end cover 252 are not prone to deforming when being pressed and collided, the battery pack 20 can have a higher structural strength, and the safety performance can also be improved.

The first end cover 251 and the second end cover 252 may be made of various materials, e.g. copper, iron, aluminum, stainless steel, an aluminum alloy, plastic etc. This is not specially limited in the embodiments of the present application.

The first insulating is disposed between the first end cover 251 and the second end cover 252 along the first direction X, and can insulate and isolate the first end cover 251 and the second end cover 252, reducing the risk of short circuit of the battery 100 caused by direct contact of the first end cover 251 and the second end cover 252. Exemplarily, the first insulating member 253 may be made of plastic, rubber, or the like.

The phrase "the collecting member 255 is embedded to the first insulating member 253" means that the first insulating member 253 wraps at least part of the collecting member 255, such that the first insulating member 253 insulates and isolates the first end cover 251 and the collecting member 255, and that the first insulating member 253 insulates and isolates the second end cover 252 and the collecting member 255.

The collecting member 255 is connected to the electrode terminal 254 may mean that the collecting member 255 is in contact with the electrode terminal 254, or that the collecting member 255 is in electrically conductive connection with the electrode terminal 254, such that information can be transmitted between the electrode terminal 254 and the collecting.

During charging and discharging of the battery 100, relevant information for the electrode terminal 254 may vary. For example, there is current flowing through the electrode terminal 254, there is voltage at the electrode terminal 254, and a temperature of the electrode terminal 254 may vary. A variation in the relevant information for the electrode terminal 254 reflects a variation in relevant information for the battery 100. By selecting different collecting members 255, different information for the battery 100 can be acquired. For example, the collecting member 255 is a voltage collecting member, the collecting member 255 is connected to the electrode terminal 254, and voltage information for the electrode terminal 254 can be obtained, thereby acquiring voltage information for the battery 100. Of course, the collecting member 255 may also be a temperature collecting member, a current collecting member, or the like.

In this embodiment, the collecting member 255 is a voltage collecting member. The voltage collecting member is made of an electrically conductive metal material, for example, the material for the voltage collecting member is selected from copper, aluminum, etc., such that the voltage collecting member can conduct electricity and transmit a voltage signal.

If the first electrode assembly 23 accommodated within the first case 21 and the second electrode assembly 24 accommodated within the second case 22 are electrically connected through the electrode terminal 254, the collecting member 255 is embedded within the first insulating member 253 and connected to the electrode terminal 254, so as to be able to collect relevant information at the electrode terminal 254, so that information collection is more convenient. Moreover, related information for the battery 100 with this end cover assembly 25 can be collected without external wires, such that the structure of the battery 100 is simpler. The collecting member 255 is embedded within the first insulating member 253, which enables the structure of the end cover assembly 25 to be more compact and the volume of the end cover assembly 25 to be smaller, and helps increase the energy density of the battery 100 with this end cover assembly 25. The collecting member 255 is embedded within the first insulating member 253, and can also enhance the insulation strength of the first insulating member 253, so that the first insulating member 253 can stably insulate and isolate the first end cover 251 and the second end cover 252, reducing the risk of short circuit of the battery 100 having the end cover assembly 25.

With continual reference to FIG. 5, in some embodiments, the collecting member 255 is provided with a through hole 2551 for the electrode terminal 254 to penetrate.

When the electrode terminal 254 penetrates the through hole 2551, the collecting member 255 is provided around the outer periphery of the electrode terminal 254. In some other embodiments, the collecting member 255 may not be provided with the through hole 2551 therein, and along a direction perpendicular to the first direction X, the collecting member 255 abuts against an outer peripheral surface of the electrode terminal 254, thereby achieving a connection between the electrode terminal 254 and the collecting member 255.

The electrode terminal 254 penetrates the through hole 2551 of the collecting member 255, and the through hole 2551 and the electrode terminal 254 form a positioning fit, enabling a stable relative position relationship to be formed between the electrode terminal 254 and the collecting member 255, and the risk of the collecting member 254 being disengaged from the electrode terminal 255 to be reduced, which helps the collecting member 255 stably collect information for the electrode terminal 254.

As shown in FIGS. 6-8, in some embodiments, the electrode terminal 254 includes a main body portion 2541 penetrating the through hole 2551, and a wall surface of the through hole 2551 is in contact with an outer peripheral surface of the main body portion 2541.

The hole wall surface of the through hole 2551 is in contact with the outer peripheral surface of the main body portion 2541 of the electrode terminal 254, thereby achieving a connection between the electrode terminal 254 and the collecting member 255. The shape of the through hole 2551 may match that of the main body portion 2541, such that the hole wall surface of the through hole 2551 is completely fitted with the outer peripheral surface of the main body portion 2541. For example, the through hole 2551 is a circular hole, and then the main body portion 2541 is of a cylindrical structure. For another example, the through hole 2551 is a hexagonal hole, and then the main body portion 2541 is of a hexagonal prism structure.

Of course, only part of the wall surface of the through hole 2551 may be connected to the outer peripheral surface of the main body portion 2541.

The phrase "the outer peripheral surface of the main body portion 2541" refers to a surface of the main body portion 2541 that is visible along a second direction Y.

The hole wall surface of the through hole 2551 is in contact with the outer peripheral surface of the main body portion 2541, thereby achieving the connection between the electrode terminal 254 and the collecting member 255, and this facilitates the connection. The through hole 2551 and the electrode terminal 254 form a positioning fit, enabling a stable relative position relationship to be formed between the electrode terminal 254 and the collecting member 255, and the risk of the collecting member 254 being disengaged from the electrode terminal 255 to be reduced, which helps the collecting member 255 stably collect information for the electrode terminal 254.

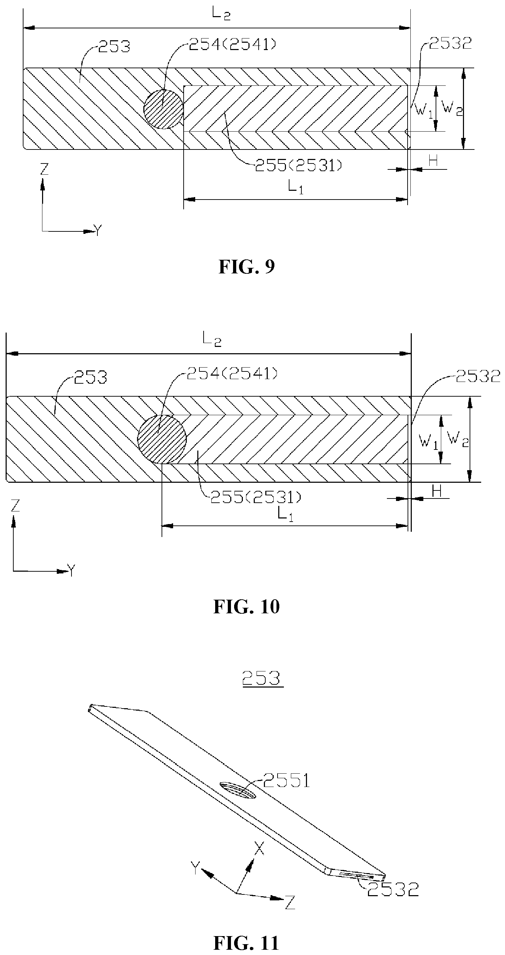

In an embodiment where the collecting member 255 is not provided with the through hole 2551, as shown in FIGS. 9 and 10, along a direction perpendicular to the first direction X (the second direction Y in the figures), one end face of the collecting member 255 is in contact with the outer periphery of the main body portion 2541, thereby achieving the connection between the electrode terminal 254 and the collecting member 255. It is shown in FIG. 9 that if the main body portion 2541 is of a cylindrical structure, the end face of the collecting member 255 in contact with the outer peripheral surface of the main body portion 2541 is a plane. It is shown in FIG. 10 that if the main body portion 2541 is of a cylindrical structure, the end face of the collecting member 255 in contact with the outer peripheral surface of the main body portion 2541 is an arc surface, and the arc surface matches the outer peripheral surface of the main body portion 2541.

As shown in FIGS. 11, 12, 13, and 14, in some embodiments, an outer peripheral surface of the first insulating member 253 is provided with a slot 2531 extending to the interior of the first insulating member 253 along the second direction Y, with the collecting member 255 at least partially inserted into the slot 2531, and the first direction X perpendicular to the second direction Y.

The phrase "the outer peripheral surface of the first insulating member 253" refers to a surface of the first insulating member 253 that is visible along the second direction Y. The collecting member 255 may be partially located within the slot 2531 along the second direction Y, or the collecting member 255 may be entirely located within the slot 2531 along the second direction Y. The collecting member 255 may be partially located within the slot 2531 along a third direction Z, or the collecting member 255 may be entirely located within the slot 2531 along the third direction Z. The first direction X, the second direction Y, and the third direction Z are mutually perpendicular to each other.

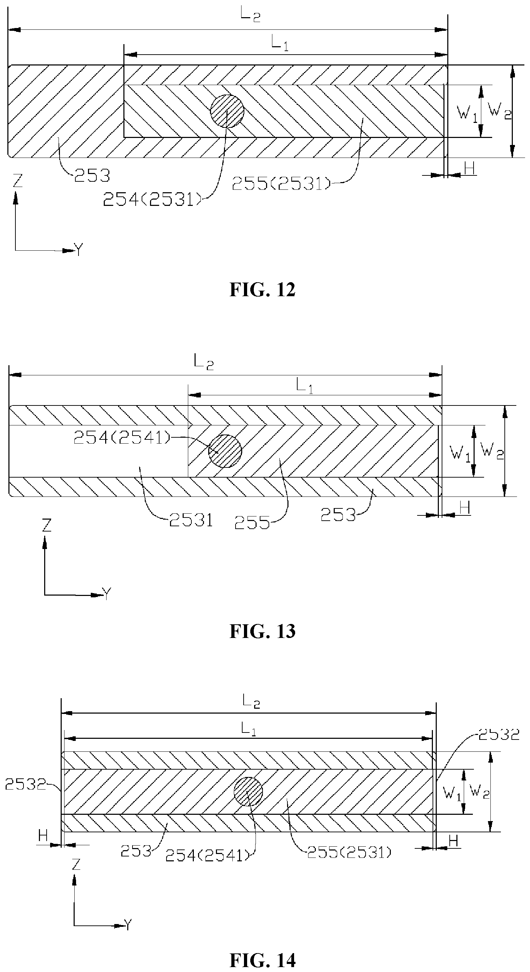

As shown in FIG. 12, along the second direction Y, the slot 2531 may form a slot opening 2532 only on an opposed side of the first insulating member 253 along the second direction Y. As shown in FIGS. 13 and 14, along the second direction Y, the slot 2531 may run through both sides of the first insulating member 253 to form slot openings 2532 on opposed sides of the first insulating member 253 along the second direction Y.

The collecting member 255 is inserted into the slot 2531 of the first insulating member 253. Along the first direction X, part of the first insulating member 253 is located between the first end cover 251 and the collecting member 255 to insulate and isolate the first end cover 251 and the collecting member 255. Another part of the first insulating member 253 is located between the second end cover 252 and the collecting member 255 to insulate and isolate the second end cover 252 and the collecting member 255.

The collecting member 255 is inserted into the slot 2531 of the first insulating member 253, which not only does not require additional space, but also enables the first insulating member 253 to insulate and isolate the collecting member 255 from the first end cover 251 and the collecting member 255 from the second end cover 252, reducing the risk of short circuit of the battery 100 with this end cover assembly 25.

As shown in FIGS. 12, 13, and 14, in some embodiments, the collecting member 255 is entirely located within the slot 2531.

It can be understood that the collecting member 255 is completely located within the slot 2531, which can reduce the risk of contact of other structures of the battery 100 with the collecting member 255.

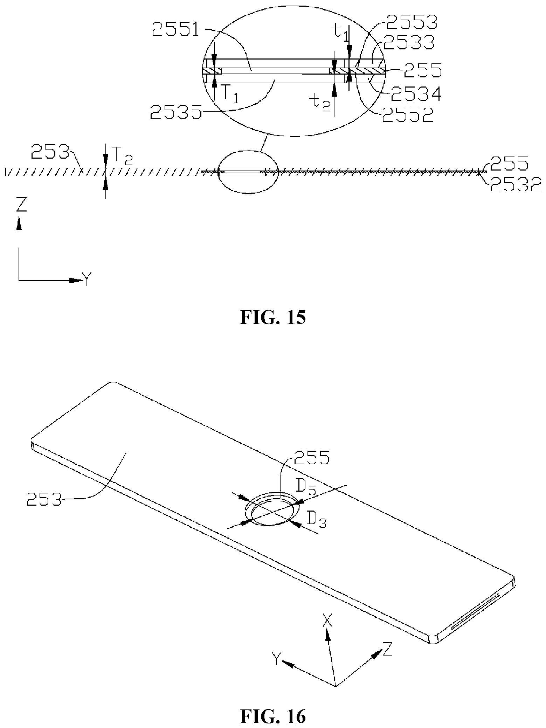

In some other embodiments, at least one end of the collecting member 255 along the second direction Y may extend out of the slot 2531. It is shown in FIG. 15 of a situation in which one end of the collecting member 255 along the second direction Y may extend out of the slot 2531.

The collecting member 255 is entirely located within the slot 2531, and then the collecting member 255 will not extend out of the slot 2531 to interfere with other structures.

With continual reference to FIGS. 12-14, in an embodiment where the collecting member 255 is entirely located within the slot 2531, the slot 2531 forms a slot opening 2532 on an outer peripheral surface of the first insulating member 253, and along the second direction Y, a spacing between the collecting member 255 and the slot opening 2532 is H, with H≤3 mm.

The phrase "the spacing H between the collecting member 255 and the slot opening 2532" refers to a maximum spacing between the slot opening 2532 of the slot 2531 and an end of the collecting member 255 closest to this slot opening 2532. In an embodiment where the slot 2531 runs through both sides of the first insulating member 253 along the second direction Y, the slot 2531 forms slot openings 2532 on both opposed sides of the first insulating member 253 along the second direction Y, and the maximum spacing H between the slot openings 2532 on both sides and the end of the collecting member 255 closest to this slot opening 2532 satisfies H≤3mm. For example, H may be 0 mm, 0.5 mm, 1 mm, 1.5 mm, 2 mm, 2.5 mm or the like.

The larger the spacing between the collecting member 255 and the slot opening 2532, the deeper the collecting member 255 is located within the slot 2531. The collecting member 255 is demounted or mounted, and it is inconvenient to position the through hole 2551 in the collecting member 255.

Therefore, the collecting member 255 is entirely located within the slot 2531 and the distance between the collecting member 255 and the slot opening 2532 of the slot 2531 is less than or equal to 3 mm, which not only allows the collecting member 255 not to extend out of the slot 2531 to interfere with other structures, but also allows the collecting member 255 to be not too far from the slot opening 2532, making it convenient to mount the collecting member 255.

As shown in FIG. 15, in some embodiments, along the first direction X, the thickness of the collecting member 255 is T₁, and the thickness of the first insulating member 253 is T₂, where T₁/T₂≥0.1.

The thickness of the collecting member 255 is a dimension of the collecting member 255 in the first direction X. Along the first direction X, the collecting member 255 has a first surface 2552 facing the first end cover 251 and a second surface 2553 facing the second end cover 252. The first surface 2552 and the second surface 2553 are arranged in opposed manner. The thickness of the collecting member 255 is a distance between the first surface 2552 and the second surface 2553.

With continued reference to FIG. 15, in an embodiment where the slot 2531 does not run through both sides of the first insulating member 253 along the second direction Y, part of the first insulating member 253 overlaps with the collecting member 255, and another part of the first insulating member 253 does not overlap with the collecting member 255. In an area where the first insulating member 253 overlaps with the collecting member 255, the first insulating member 253 includes a first portion 2533 and a second portion 2534 located on two sides of the collecting member 255 along the first direction X, the first surface 2552 includes a surface of the first portion 2533 facing away from the collecting member 255, and the second surface 2553 includes a surface of the second portion 2534 facing away from the collecting member 255. A dimension along the first direction X of the part of the first insulating member 253 not overlapping with the collecting member 255 is the same as a distance in the first direction X between the surface of the first portion 2533 facing away from the collecting member 255 and the surface of the second portion 2534 facing away from the collecting member 255, that is, the thickness of the first insulating member 253. In this embodiment, the thickness t₁ (the dimension of the first portion 2533 in the first direction X) of the first portion 2533 and the thickness t₂ (the dimension of the second portion 2534 in the first direction X) of the second portion 2534 are the same. In some other embodiments, the thickness t1 of the first portion 2533 and the thickness t2 of the second portion 2534 may also be different.

If T₁/T₂ is too small, the collecting member 255 does not contribute much to strength of the overall structure formed by the collecting member 255 and the first insulating member 253. Therefore, T₁/T₂≥0.1, such that the collecting member 255 can significantly enhance the strength of the first insulating member 253.

T₁/T₂ may be 0.2, 0.3, 0.4, 0.5, 0.6, 0.7, 0.8, 0.9, or the like.

The strength and fracture toughness of the collecting member 255 are better than those of the first insulating member 253, and the thickness T₁ of the collecting member 255 and the thickness T₂ of the first insulating member 253 satisfy T₁/T₂≥0.1, such that the overall structural formed by the first insulating member 253 and the collecting member 255 is better in strength.

If T₁/T₂ is too large, then in an overlapping area of the first insulating member 253 and the collecting member 255, along the first direction X, the thicknesses of the first portion 2533 and the second portion 2534 located on two sides of the collecting member 255 are smaller, such that the insulation effect of the first portion 2533 between the first end cover 251 and the collecting member 255 is poorer, and the insulation effect of the second portion 2534 between the second end cover 252 and the collecting member 255 is poorer. Therefore, in some embodiments, T₁/T₂≤0.7.

For example, T₁/T₂ may be 0.22, 0.25, 0.27, 0.35, 0.37, 0.45, 0.47, 0.55, 0.57, 0.65, 0.67, or the like.

The thickness T₁ of the collecting member 255 and the thickness T₂ of the first insulating member 253 satisfy T₁/T₂≤0.7, such that the first insulating member 253 has good insulation performance on both sides of the collecting member 255 along the first direction X.

With continued reference to FIGS. 12-14, in some embodiments, along the second direction Y, the length of the collecting member 255 is L₁, and the length of the first insulating member 253 is L₂, where L₁/L₂≥0.5.

The length of the collecting member 255 is a dimension of the collecting member 255 along the second direction Y, and the length of the first insulating member 253 is a dimension of the first insulating member 253 along the second direction Y.

L₁/L₂ may be 0.55, 0.6, 0.65, 0.7, 0.75, 0.8, 0.85, 0.9, 0.95, or the like.

The larger L₁/L₂, the greater the length of the overlapping area that the collecting member 255 and the first insulating member 253 have in the second direction Y when the collecting member 255 is fully inserted within the slot 2531, which helps enhance the structural strength of the overall structure formed by the collecting member 255 and the first insulating member 253.

The length L₁ of the collecting member 255 and the length L₂ of the first insulating member 253 satisfy: L₁/L₂≥0.5, such that the overall structure formed by the first insulating member 253 and the collecting member 255 has good structural strength.

If the length of the collecting member 255 is greater than that of the first insulating member 253, when the collecting member 255 is inserted into the slot 2531, at least one end of the collecting member 255 along the second direction Y extends out of the slot 2531, causing the collecting member 255 to interfere with other structures. Based thereon, in some embodiments, L₁/L₂≤1.

L₁/L₂≤1 can be understood as the length of the collecting member 255 being less than or equal to that of the first insulating member 253, such that the collecting member 255 may be completely inserted within a receiving hole and the collecting member 255 does not extend beyond the first insulating member 253 along the second direction Y to interfere with other structures.

With continued reference to FIGS. 12-14, in some embodiments, along a third direction Z, the width of the collecting member 255 is W₁, the width of the first insulating member 253 is W₂, where W₁/W₂≥ 0.4, and the first direction X, the second direction Y, and the third direction Z are mutually perpendicular to each other.

The width of the collecting member 255 is a dimension of the collecting member 255 along the third direction Z, and the width of the first insulating member 253 is a dimension of the first insulating member 253 along the third direction Z.

W₁/W₂ may be 0.45, 0.5, 0.55, 0.6, 0.65, 0.7, 0.75, 0.8, 0.85, 0.9, 0.95, or the like.

The larger W₁/W₂, the greater the length of the overlapping area that the collecting member 255 and the first insulating member 253 have in the third direction Z when the collecting member 255 is fully inserted within the slot 2531, which helps enhance the structural strength of the overall structure formed by the collecting member 255 and the first insulating member 253.

The width W₁ of the collecting member 255 and the width W₂ of the first insulating member 253 satisfy: W₁/W₂≥0.4, such that the overall structure formed by the first insulating member 253 and the collecting member 255 has good structural strength.

If W₁/W₂ is too great, third and fourth portions of the first insulating member 253 located on two sides of the collecting member 255 along the third direction Z have smaller dimensions along the third direction Z, resulting in poorer insulation effects of the third and fourth portion, as well as poorer insulation effects of the third and fourth portion between the first end cover 251 and the collecting member 255, and weakened protection capabilities of the third and fourth portions for the collecting member 255. Based thereon, in some embodiments, W₁/W₂≤0.8.

W₁/W₂ may be 0.47, 0.49, 0.52, 0.57, 0.59, 0.62, 0.65, 0.67, 0.72, 0.79, or the like.

The width W₁ of the collecting member 255 and the width W₂ of the first insulating member 253 satisfy: W₁/W₂≤0.8, such that the collecting member 255 does not extend beyond the first insulating member 253 along the third direction Z to interfere with other structures.

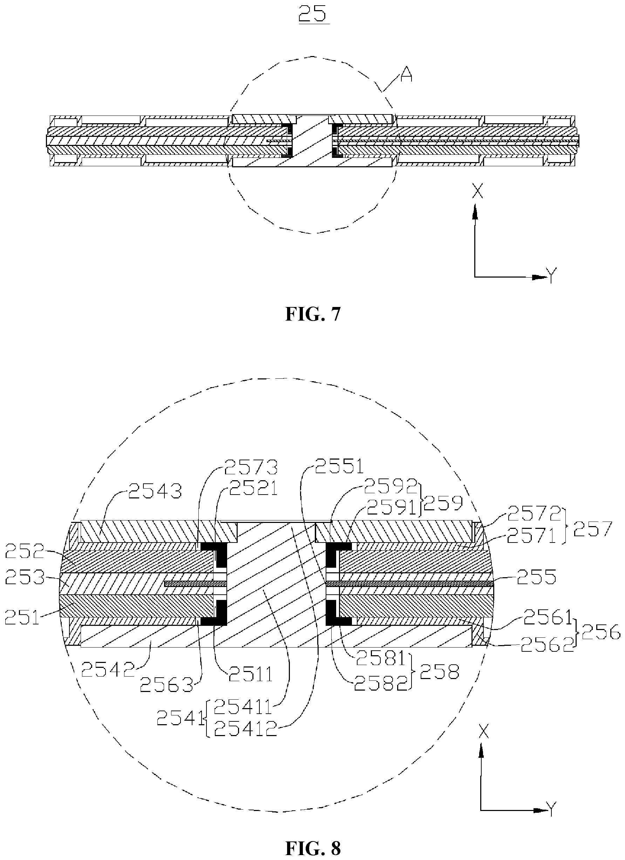

Referring to FIGS. 5 and 8 in conjunction, in some embodiments, the first end cover 251 is provided with a first mounting hole 2511, the second end cover 252 is provided with a second mounting hole 2521, and the first insulating member 253 is provided with a third mounting hole 2535; the electrode terminal 254 includes a main body portion 2541, and the main body portion 2541 penetrates the first mounting hole 2511, the third mounting hole 2535, and the second mounting hole 2521.

The first mounting hole 2511, the second mounting hole 2521, and the third mounting hole 2535 are coaxially arranged. In an embodiment where the collecting member 255 is provided with a through hole 2551, the first mounting hole 2511, the second mounting hole 2521, the third mounting hole 2535, and the through hole 2551 are coaxially arranged.

The main body portion 2541 penetrates the first mounting hole 2511, the third mounting hole 2535, and the second mounting hole 2521 then the first mounting hole 2511, the second mounting hole 2521, and the third mounting hole 2535 are all in positioning fit with the electrode terminal 254, such that the first end cover 251, the second end cover 252 and the first insulating member 253 can be in a stable relative position relationship with the electrode terminal 254, improving structural stability of the end cover assembly 25.

With continued reference to FIGS. 5 and 8, in some embodiments, the diameter of the first mounting hole 2511 is greater than that of the main body portion 2541, the diameter of the second mounting hole 2521 is greater than that of the main body portion 2541, and the diameter of the third mounting hole 2535 is greater than that of the main body portion 2541.

The diameter of the first mounting hole 2511 is D₁, the diameter of the second mounting hole 2521 is D₂, the diameter of the third mounting hole 2535 is D₃, and the diameter of the main body portion 2541 is D₄, that is, D₁>D₄, D₂>D₄, and D₃>D₄. In this embodiment, the diameter D₁ of the first mounting hole 2511, the diameter D₂ of the second mounting hole 2521 and the diameter D₃ of the third mounting hole 2535 are the same, that is, D₁=D₂=D₃. In some other embodiments, the diameter D₁ of the first mounting hole 2511, the diameter D₂ of the second mounting hole 2521 and the diameter D₃ of the third mounting hole 2535 may also be different.

The diameter of the first mounting hole 2511 is greater than that of the main body portion 2541, and then a first gap is formed between a hole wall surface of the first mounting hole 2511 and an outer peripheral surface of the main body portion 2541. The diameter of the second mounting hole 2521 is greater than that of the main body portion 2541, and then a second gap is formed between a hole wall surface of the second mounting hole 2521 and the outer peripheral surface of the main body portion 2541. The diameter of the third mounting hole 2535 is greater than that of the main body portion 2541, and then a third gap is formed between a hole wall surface of the third mounting hole 2535 and the outer peripheral surface of the main body portion 2541.

As shown in FIG. 16, in an embodiment where the collecting member 255 has a through hole 2551, a diameter D₅ of the through hole 2551 is less than the diameter D₃ of the third mounting hole 2535.

The diameters of the first mounting hole 2511, the second mounting hole 2521, and the third mounting hole 2535 are all greater than the diameter of the main body portion 2541, reducing the risk of assembly failure caused by interference of the main body portion 2541 of the electrode terminal 254 with the first end cover 251, the second end cover 252, and the first insulating member 253 during assembly. The first gap, the second gap, and the third gap can also accommodate other components, such as a sealing member, to improve the sealing performance for the end cover assembly 25.

Referring to FIGS. 5 and 8, in some embodiments, the electrode terminal 254 further includes a first connecting portion 2542 and a second connecting portion 2543, the first connecting portion 2542 and the second connecting portion 2543 are both connected to the main body portion 2541, the first connecting portion 2542 is located on a side of the first end cover 251 facing away from the second end cover 252, and the second connecting portion 2543 is located on a side of the second end cover 252 facing away from the first end cover 251.

The first connecting portion 2542 is connected to one end of the main body portion 2541. In this embodiment, the first connecting portion 2542 and the main body portion 2541 are integrally formed. In some other embodiments, the first connecting portion 2542 and the main body portion 2541 may also be connected to form a whole by other connection means, e.g. welding, bonding or the like of the first connecting portion 2542 and the main body portion 2541. A tab of the first electrode assembly 23 may be electrically conductively connected to the main body portion 2541 via the first connecting portion 2542.

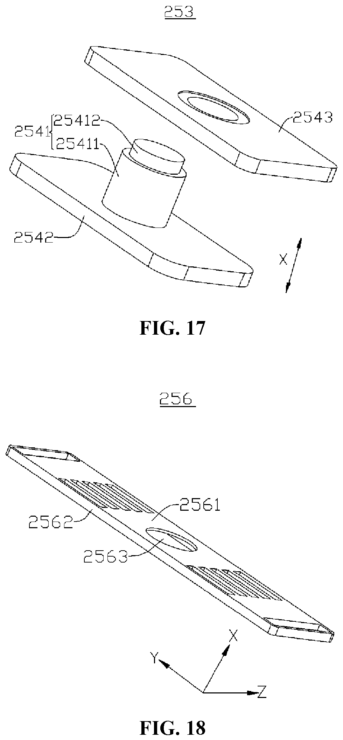

As shown in FIGS. 8 and 17, the main body portion 2541 includes a first section 25411 and a second section 25412 which are connected and coaxial, and the diameter of the first section 25411 is greater than that of the second section 25412. One end of the first section 25411 facing away from the second section 25412 is connected to the first connecting portion 2542. The second connecting portion 2543 is provided in sleeving manner on an outer periphery of the second section 25412, and a surface of the second connecting portion 2543 facing the first connecting portion 2542 in the first direction X abuts against an end face of the first section 25411 facing away from the first connecting portion 2542. The main body portion 2541 and the second connecting portion 2543 are riveted. A tab of the second electrode assembly 24 may be electrically conductively connected to the main body portion 2541 via the second connecting portion 2543.

The first connecting portion 2542, the main body portion 2541, and the second connecting portion 2543 together keep the first end cover 251, the second end cover 252, and the first insulating member 253 in a stable stacked state.

The first connecting portion 2542 and the second connecting portion 2543 are both connected to the main body portion 2541, and are located on the side of the first end cover 251 facing away from the second end cover 252 and the side of the second end cover 252 facing away from the first end cover 251, respectively, which can provide a limiting action to enable the structure of the end cover assembly 25 to be more compact and the structural stability of the end cover assembly 25 to be improved.

Referring to FIGS. 5 and 8 in conjunction, in some embodiments, the end cover assembly 25 further includes a second insulating member 256 and a third insulating member 257, at least part of the second insulating member 256 is located between the first end cover 251 and the first connecting portion 2542 to insulate and separate the first end cover 251 and the first connecting portion 2542, and at least part of the third insulating member 257 is located between the second end cover 252 and the second connecting portion 2543 to insulate and separate the second end cover 252 and the second connecting portion 2543.

Only part of the second insulating member 256 may be located between the first end cover 251 and the first connecting portion 2542. As shown in FIGS. 8 and 18, the second insulating member 256 includes a first insulating portion 2561 and a second insulating portion 2562. Along the first direction X, the first insulating portion 2561 is disposed in stacked manner between the first end cover 251 and the first connecting portion 2542 to insulate and separate the first connecting portion 2542 and the first end cover 251. The first insulating portion 2561 has a first receiving hole 2563 for the main body portion 2541 to penetrate, and the first receiving hole 2563 and the first mounting hole 2511 are coaxially arranged. the diameter of the first receiving hole 2563 is greater than that of the first mounting hole 2511.

The second insulating portion 2562 is connected to the first insulating portion 2561. Along the first direction X, the second insulating portion 2562 extends from the first insulating portion 2561 in a direction facing away from the first end cover 251, and the second insulating portion 2562 extends to the outer periphery of the first connecting portion 2542. The second insulating portion 2562 is arranged around the outer periphery of the first connecting portion 2542. The first insulating portion 2561 and the second insulating portion 2562 together define a first accommodating portion for accommodating the first connecting portion 2542. It can be understood that the second insulating member 256 coats the first connecting portion 2542, further reducing the risk of short circuit of the battery 100. The first connecting portion 2542 may also extend out of the first accommodating portion along a direction facing away from the first end cover 251, so as to facilitate electrically conductive connection between the first connecting portion 2542 and the tab of the first electrode assembly 23. In some other embodiments, along the first direction X, the first connecting portion 2542 may be entirely located within the first accommodating portion.

In some other embodiments, the second insulating member 256 may also be completely located between the first connecting portion 2542 and the first end cover 251.

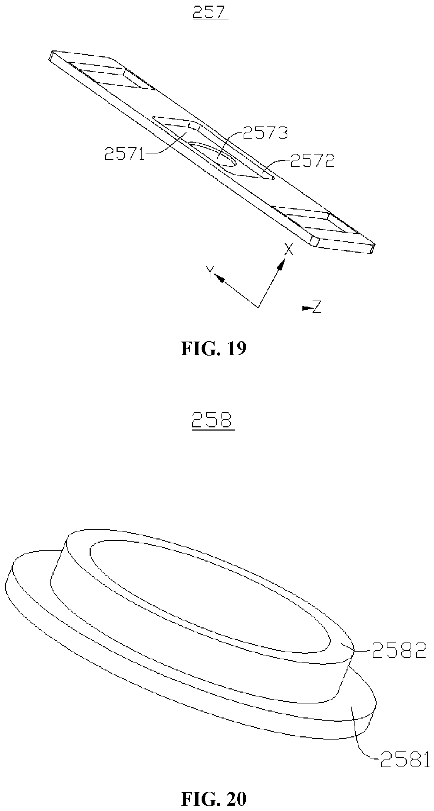

Only part of the third insulating member 257 may be located between the second end cover 252 and the second connecting portion 2543. As shown in FIGS. 8 and 19, the third insulating member 257 includes a third insulating portion 2571 and a fourth insulating portion 2572. Along the first direction X, the third insulating portion 2571 is disposed in stacked manner between the second end cover 252 and the second connecting portion 2543 to insulate and separate the second connecting portion 2543 and the second end cover 252. The third insulating portion 2571 has a second receiving hole 2573 for the main body portion 2541 to penetrate, and the second receiving hole 2573 and the second mounting hole 2521 are coaxially arranged. the diameter of the second receiving hole 2573 is greater than that of the second mounting hole 2521.

The fourth insulating portion 2572 is connected to the third insulating portion 2571. Along the first direction X, the fourth insulating portion 2572 extends from the third insulating portion 2571 in a direction facing away from the second end cover 252, and the fourth insulating portion 2572 extends to the outer periphery of the second connecting portion 2543. The fourth insulating portion 2572 is arranged around the outer periphery of the second connecting portion 2543. The third insulating portion 2571 and the fourth insulating portion 2572 together define a second accommodating portion for accommodating the second connecting portion 2543. It can be understood that the third insulating member 257 coats the second connecting portion 2543, further reducing the risk of short circuit of the battery 100. The second connecting portion 2543 may also extend out of the second accommodating portion along a direction facing away from the second end cover 252, so as to facilitate electrically conductive connection between the second connecting portion 2543 and a tab of the second electrode assembly 24. In some other embodiments, along the first direction X, the second connecting portion 2543 may be entirely located within the second accommodating portion.

In some other embodiments, the third insulating member 257 may also be completely located between the second connecting portion 2543 and the second end cover 252.

The provision of the second insulating member 256 and the third insulating member 257 can reduce the risk of short circuit of a battery pack 20 and a battery 100 having this end cover assembly 25.

As shown in FIGS. 5 and 8, in some embodiments, the end cover assembly 25 further includes a first sealing member 258 and a second sealing member 259, at least part of the first sealing member 258 provides sealing between the first connecting portion 2542 and the first end cover 251, and at least part of the second sealing member 259 provides sealing between the second connecting portion 2543 and the second end cover 252.

Only part of the first sealing member 258 may provide sealing between the first end cover 251 and the first connecting portion 2542. As shown in FIGS. 8 and 20, the first sealing member 258 is provided in sleeving manner on the outer periphery of the main body portion 2541. The first sealing member 258 includes a first sealing portion 2581 and a second sealing portion 2582 that are connected, and the first sealing portion 2581 and the second sealing portion 2582 are coaxially arranged. The first sealing portion 2581 provides sealing between the first connecting portion 2542 and the first end cover 251. An outer diameter of the first sealing portion 2581 is less than an inner diameter of the first receiving hole 2563, such that a gap is formed between an outer peripheral surface of the first sealing portion 2581 and a hole wall surface of the first receiving hole 2563 along a radial direction of the main body portion 2541, providing a space for radial deformation of the first sealing portion 2581 along the main body portion 2541, thereby improving the sealing performance of the first sealing portion 2581 between the first end cover 251 and the first connecting portion 2542. The second sealing portion 2582 extends from the first sealing portion 2581 along the first direction X into the first mounting hole 2511. The outer diameter of the first sealing portion 2581 is greater than that of the second sealing portion 2582. The second sealing portion 2582 may play a sealing role between the hole wall surface of the first mounting hole 2511 and the outer peripheral surface of the main body portion 2541, and the second sealing portion 2582 may also be only accommodated between the hole wall surface of the first mounting hole 2511 and the outer peripheral surface of the main body portion 2541.

In some other embodiments, the entirety of the first sealing member 258 may provide sealing between the first end cover 251 and the first connecting portion 2542.

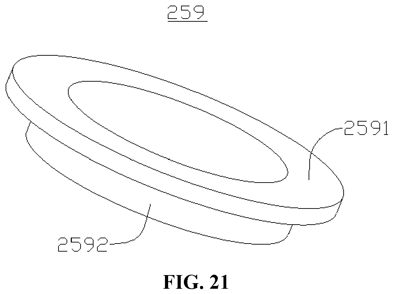

Only part of the second sealing member 259 may provide sealing between the second end cover 252 and the second connecting portion 2543. As shown in FIGS. 8 and 21, the second sealing member 259 is provided in sleeving manner on the outer periphery of the main body portion 2541. The second sealing member 259 includes a third sealing portion 2591 and a fourth sealing portion 2592 that are connected, and the third sealing portion 2591 and the fourth sealing portion 2592 are coaxially arranged. The third sealing portion 2591 provides sealing between the second connecting portion 2543 and the second end cover 252. An outer diameter of the third sealing portion 2591 is less than an inner diameter of the second receiving hole 2573, such that a gap is formed between an outer peripheral surface of the third sealing portion 2591 and a hole wall surface of the second receiving hole 2573 along the radial direction of the main body portion 2541, providing a space for radial deformation of the third sealing portion 2591 along the main body portion 2541, thereby improving the sealing performance of the third sealing portion 2591 between the second end cover 252 and the second connecting portion 2543. The fourth sealing portion 2592 extends from the third sealing portion 2591 along the first direction X into the second mounting hole 2521. The outer diameter of the third sealing portion 2591 is greater than that of the fourth sealing portion 2592. The fourth sealing portion 2592 may play a sealing role between the hole wall surface of the second mounting hole 2521 and the outer peripheral surface of the main body portion 2541, and the fourth sealing portion 2592 may also be only accommodated between the hole wall surface of the second mounting hole 2521 and the outer peripheral surface of the main body portion 2541.

In some other embodiments, the entirety of the second sealing member 259 may provide sealing between the second end cover 252 and the second connecting portion 2543.

The first sealing member 258 and the second sealing member 259 can improve sealing performance for the end cover assembly 25, and can reduce the risk of liquid leakage of the battery pack 20 and the battery 100 with this end cover assembly 25 from the end cover assembly 25.

An embodiment of the present application further provides a battery pack 20. The battery pack 20 includes a first case 21, a second case 22, and an end cover assembly 25 according to any of the embodiments above; the first case 21 is used to accommodate the first electrode assembly 23; the second case 22 is used to accommodate the second electrode assembly 24; the first end cover 251 covers an opening of the first case 21, the second end cover 252 covers an opening of the second case 22, and the electrode terminal 254 is used to achieve an electrical connection between the first electrode assembly 23 and the second electrode assembly 24.

In this embodiment, the first end cover 251 covers the opening of the first case 21, and the first end cover and the first case together define a space for accommodating the first electrode assembly 23. The second end cover 252 covers the opening of the second case 22, and the second end cover and the second case together define a space for accommodating the second electrode assembly 24. The electrode terminal 254 is electrically conductively connected to the positive tab 231 of the first electrode assembly 23 and the negative tab 241 of the second electrode assembly 24, respectively, so as to achieve a series connection of the first electrode assembly 23 and the second electrode assembly 24.

The electrode terminal 254 and the positive tab 231 of the first electrode assembly 23 may be directly conductively connected, or the electrode terminal 254 and the positive tab 231 of the first electrode assembly 23 may be indirectly conductively connected via a current collecting member. The electrode terminal 254 and the negative tab 241 of the second electrode assembly 24 may be directly conductively connected, or the electrode terminal 254 and the negative tab 241 of the second electrode assembly 24 may be indirectly conductively connected via a current collecting member.

With the battery pack 20 including the end cover assembly 25 of any of the embodiments above, information collection is more convenient, and related information for the battery pack 20 with this end cover assembly 25 can be collected without external wires, such that the structure of the battery pack 20 is simpler.

An embodiment of the present application further provides a battery 100. The battery 100 includes a battery pack 20 according to the embodiments above.

An embodiment of the present application further provides an electrical device, the electrical device including a battery 100 according to the embodiments above.

An embodiment of the present application provides a battery pack 20, the battery pack 20 including a first case 21, a second case 22, a first electrode assembly 23, a second electrode assembly 24, and an end cover assembly 25. The end cover assembly 25 includes a first end cover 251, a first insulating member 253, a second end cover 252, an electrode terminal 254, a collecting member 255, a second insulating member 256, a third insulating member 257, a first sealing member 258, and a second sealing member 259. The first end cover 251, the first insulating member 253, and the second end cover 252 are disposed in stacked manner in sequence along a first direction X. A main body portion 2541 of the electrode terminal 254 penetrates a first mounting hole 2511 of the first end cover 251, a third mounting hole 2535 of the first insulating member 253, a through hole 2551 of the collecting member 255, and a second mounting hole 2521 of the second end cover 252 in sequence. A first connecting portion 2542 of the electrode terminal 254 is located on a side of the first end cover 251 facing away from the second end cover 252, and a second connecting portion 2543 of the electrode terminal 254 is located on a side of the second end cover 252 facing away from the first end cover 251.

A first insulating portion 2561 of the second insulating member 256 insulates and separates the first end cover 251 and the first connecting portion 2542 of the electrode terminal 254 in the first direction X, and a second insulating portion 2562 of the second insulating member 256 extends from the first insulating portion 2561 to the outer periphery of the first connecting portion 2542. A first sealing portion 2581 of the first sealing member 258 provides sealing between the first connecting portion 2542 and the first end cover 251, and a second sealing portion 2582 of the first sealing member 258 extends from the first sealing portion 2581 along the first direction X into the first mounting hole 2511 and is located between a hole wall surface of the first mounting hole 2511 and an outer peripheral surface of the main body portion 2541.

A third insulating portion 2571 of the third insulating member 257 insulates and separates the second end cover 252 and the second connecting portion 2543 of the electrode terminal 254 in the first direction X, and a fourth insulating portion 2572 of the third insulating member 257 extends from the third insulating portion 2571 to the outer periphery of the second connecting portion 2543. A third sealing portion 2591 of the second sealing member 259 provides sealing between the second connecting portion 2543 and the second end cover 252, and a fourth sealing portion 2592 of the second sealing member 259 extends from the third sealing portion 2591 along the first direction X into the second mounting hole 2521 and is located between a hole wall surface of the second mounting hole 2521 and the outer peripheral surface of the main body portion 2541.

The collecting member 255 is inserted into a slot 2531 in an outer peripheral surface of the first insulating member 253. A hole wall surface of the through hole 2551 of the collecting member 255 is in contact with the outer periphery of the electrode assembly to achieve a connection between the collecting member 255 and the electrode terminal 254.

The first electrode assembly 23 is accommodated within the first case 21, and the first end cover 251 of the end cover assembly 25 covers an opening of the first case 21. The second electrode assembly 24 is accommodated within the second case 22, and the second end cover 252 of the end cover assembly 25 covers an opening of the first case 21. The first connecting portion 2542 and the second connecting portion 2543 of the electrode terminal 254 are electrically conductively connected to a positive tab 231 of the first electrode assembly 23 and a negative tab 241 of the second electrode assembly 24, respectively.

The above are only preferred embodiments of the present application, and are not intended to limit the present application. For those skilled in the art, the present application may have various modifications and variations. Any modification, equivalent replacement, improvement, etc. made within the spirit and principle of the present application shall fall within the scope of protection of the present application.

## Claims

1. An end cover assembly, comprising:
a first end cover for closing an opening of a first case;
a second end cover for closing an opening of a second case;
a first insulating member disposed in a stacked manner along a first direction between the first end cover and the second end cover;
an electrode terminal mounted to the first end cover, the first insulating member, and the second end cover; and
a collecting member embedded within the first insulating member and connected to the electrode terminal.

2. The end cover assembly according to claim 1, wherein the collecting member is provided with a through hole for the electrode terminal to pass through.

3. The end cover assembly according to claim 2, wherein the electrode terminal comprises a main body portion passing through the through hole, and a hole wall surface of the through hole is in contact with an outer peripheral surface of the main body portion.

4. The end cover assembly according to any of claims 1-3, wherein an outer peripheral surface of the first insulating member is provided with a slot extending to the interior of the first insulating member along a second direction, and the collecting member is at least partially inserted into the slot, the first direction being perpendicular to the second direction.

5. The end cover assembly according to claim 4, wherein the collecting member is entirely located within the slot.

6. The end cover assembly according to claim 5, wherein the slot forms a slot opening at the outer peripheral surface of the first insulating member, and along the second direction, a distance between the collecting member and the slot opening is H, where H≤3 mm.

7. The end cover assembly according to claim 4 or 5, wherein along the first direction, the thickness of the collecting member is T₁, and the thickness of the first insulating member is T₂, wherein T₁/T₂≥0.1.

8. The end cover assembly according to claim 7, wherein T₁/T₂≤0.7.

9. The end cover assembly according to any of claims 4-8, wherein along the second direction, the length of the collecting member is L₁, and the length of the first insulating member is L₂, wherein L₁/L₂≥0.5.

10. The end cover assembly according to claim 9, wherein L₁/L₂≤1.

11. The end cover assembly according to any one of claims 4-10, wherein along a third direction, the width of the collecting member is W₁, the width of the first insulating member is W₂, wherein W₁/W₂≥ 0.4, and the first direction, the second direction, and the third direction are mutually perpendicular to each other.

12. The end cover assembly according to claim 11, wherein W₁/W₂≤0.8.

13. The end cover assembly according to any one of claims 1-12, wherein the first end cover is provided with a first mounting hole, the second end cover is provided with a second mounting hole, and the first insulating member is provided with a third mounting hole; and
the electrode terminal includes a main body portion, the main body portion passing through the first mounting hole, the third mounting hole, and the second mounting hole.

14. The end cover assembly according to claim 13, wherein the diameter of the first mounting hole is greater than that of the main body portion, the diameter of the second mounting hole is greater than that of the main body portion, and the diameter of the third mounting hole is greater than that of the main body portion.

15. The end cover assembly according to claim 13 or 14, wherein the electrode terminal further comprises a first connecting portion and a second connecting portion, the first connecting portion and the second connecting portion are both connected to the main body portion, the first connecting portion is located on a side of the first end cover facing away from the second end cover, and the second connecting portion is located on a side of the second end cover facing away from the first end cover.

16. The end cover assembly according to claim 15, wherein the end cover assembly further comprises a second insulating member and a third insulating member, at least part of the second insulating member is located between the first end cover and the first connecting portion to insulate and separate the first end cover and the first connecting portion, and at least part of the third insulating member is located between the second end cover and the second connecting portion to insulate and separate the second end cover and the second connecting portion.

17. The end cover assembly according to claim 15, wherein the end cover assembly further comprises a first sealing member and a second sealing member, at least part of the first sealing member provides sealing between the first connecting portion and the first end cover, and at least part of the second sealing member provides sealing between the second connecting portion and the second end cover.

18. A battery pack, comprising:
a first case for accommodating a first electrode assembly;
a second case for accommodating a second electrode assembly; and
the end cover assembly according to any one of claims 1-17, the first end cover covering an opening of the first case, the second end cover covering an opening of the second case, and the electrode terminal configured to achieve an electrical connection between the first electrode assembly and the second electrode assembly.

19. A battery, comprising the battery pack according to claim 18.

20. An electrical device, comprising the battery according to claim 19.
